# EUROPEAN PATENT APPLICATION

(11) **EP 4 797 469 A1**
(43) Date of publication of application: **26.08.2026**
(21) Application number: 23958919.5
(22) Date of filing: 17.11.2023
(51) Int. Cl.: H01S 3/097, B01D 53/04, B01D 53/82, H01S 3/00, H01S 3/036

(54) **GAS PROCESSING DEVICE AND GAS PROCESSING METHOD**

(71) Applicant: Hirata Corporation, Kumamoto-shi, Kumamoto 861-0198 (JP)
(72) Inventor: KUWAHARA, Rempei, Kumamoto-shi, Kumamoto 861-0198 (JP); NISHIDE, Junichi, Kumamoto-shi, Kumamoto 861-0198 (JP)
(74) Representative: Müller-Boré & Partner Patentanwälte PartG mbB
(86) International application number: PCT/JP2023/041505
(87) International publication number: WO 2025/104919

(57) **Abstract**

A gas processing device includes a buffer tank to which a processing target gas is supplied, a first remover that removes impurities from the processing target gas, and circulation means for circulating the processing target gas between the buffer tank and the first remover. The processing target gas having a reduced impurity concentration is discharged from the buffer tank

## Description

### TECHNICAL FIELD

The present invention relates to a gas processing device and a gas production method.

### BACKGROUND ART

Gas processing devices that remove impurities from a processing target gas in order to reuse the processing target gas or purify and discharge the processing target gas are known. As such gas processing devices, for example, PTL1 discloses a purification device that purifies laser gas discharged from a laser device and reuses the laser gas. The device of PTL1 lists semiconductor manufacturing as one example of its application. In a photolithography process, which is one process in the semiconductor manufacturing process, a wafer coated with a resist is exposed so that a circuit pattern is formed on the wafer. In order to miniaturize the circuit pattern, an excimer laser capable of oscillating short-wavelength light is used. Since the laser gas used in the excimer laser contains expensive rare gases (neon, xenon, argon, krypton, helium, and the like), reuse thereof is required. By purifying and reusing the laser gas, manufacturing costs can be reduced.

### CITATION LIST

### PATENT LITERATURE

PTL1: Japanese Patent No. 6770526

### SUMMARY OF INVENTION

### TECHNICAL PROBLEM

There are cases in which an impurity concentration in a processing target gas fluctuates. When a processing target gas having an extremely high impurity concentration is supplied to a remover that removes impurities, the removal capability of the remover is significantly damaged in some cases. In such a case, it may be necessary to stop operation of a system and perform maintenance of the remover.

An object of the present invention is to provide a technique that, even in a case where a processing target gas having a high impurity concentration is supplied, prevents a removal capability of a remover from being significantly damaged and enables continuous operation.

### SOLUTION TO PROBLEM

According to the present invention, there is provided a gas processing device comprising:
a buffer tank to which a processing target gas is supplied;
a first remover that removes impurities from the processing target gas; and
circulation means for circulating the processing target gas between the buffer tank and the first remover, wherein
the processing target gas having a reduced impurity concentration is discharged from the buffer tank.

### ADVANTAGEOUS EFFECTS OF INVENTION

According to the present invention, there is provided a technique that, even in a case where a processing target gas having a high impurity concentration is supplied, prevents a removal capability of a remover from being significantly damaged and enables continuous operation.

### BRIEF DESCRIPTION OF DRAWINGS

FIG. 1 is a block diagram of a laser processing system to which the present invention is applied.
FIG. 2 is a block diagram of a gas processing device according to one embodiment of the present invention.
FIG. 3 is an explanatory diagram of operation modes of the gas processing device of FIG. 2.
FIG. 4 is an explanatory diagram of control states of respective operation modes of the gas processing device of FIG. 2.
FIG. 5 is a flowchart illustrating a control example of the gas processing device of FIG. 2.
FIG. 6 is a flowchart illustrating a control example of the gas processing device of FIG. 2.
FIG. 7 is a flowchart illustrating a control example of the gas processing device of FIG. 2.

### DESCRIPTION OF EMBODIMENTS

Hereinafter, embodiments will be described in detail with reference to the attached drawings. Note that the following embodiments are not intended to limit the scope of the claimed invention, and limitation is not made to an invention that requires all combinations of features described in the embodiments. Two or more of the multiple features described in the embodiments may be combined as appropriate. Furthermore, the same reference numerals are given to the same or similar configurations, and redundant description thereof is omitted.

### <Laser Processing System>

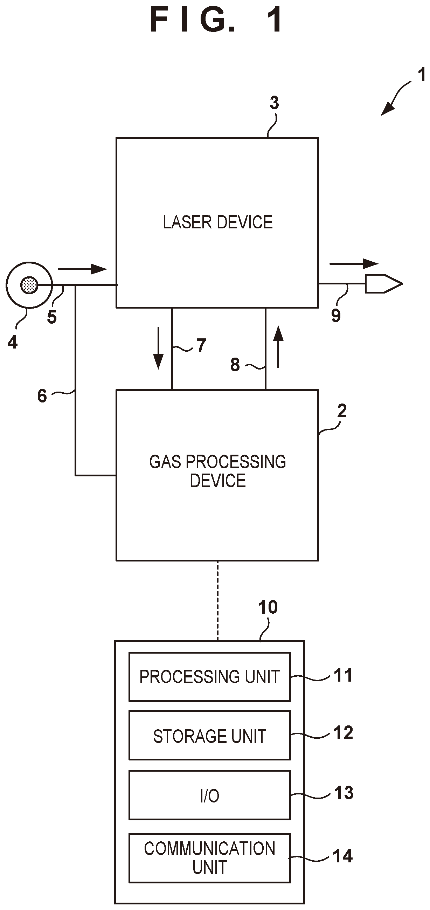

FIG. 1 is a block diagram of a laser processing system 1 to which the present invention is applied. The laser processing system 1 includes a gas processing device 2 and a laser device 3. The laser device 3 constitutes, for example, a semiconductor manufacturing device that irradiates a wafer with an excimer laser to form fine grooves. Fresh laser gas is supplied to the laser device 3 from a supply source 4 via a pipe 5. The spent laser gas that has been used in the laser device 3 and contains impurities such as water and oxygen can be discharged to the outside via a pipe 9. The fresh laser gas is laser gas that has not been used in the laser device 3 and is laser gas having an impurity content equal to or less than a predetermined value. Note that the spent laser gas purified by the gas processing device 2 described later also has an impurity content and a component ratio equivalent to those of the fresh laser gas and can be reused.

The gas processing device 2 is a gas production device that uses the spent laser gas discharged from the laser device 3 as a processing target gas and removes impurities from the spent laser gas to purify the laser gas. The gas processing device 2 removes impurities from the spent laser gas supplied from the laser device 3 via a pipe 7. The gas processing device 2 supplies the purified laser gas to the laser device 3 via a pipe 8. The laser processing system 1 is capable of circulating the laser gas between the gas processing device 2 and the laser device 3 via the pipe 7 and the pipe 8. The gas processing device 2, as a gas production device, purifies the spent laser gas and produces new usable laser gas.

The circulation amount of the laser gas between the gas processing device 2 and the laser device 3, the supply amount of fresh laser gas from the supply source 4 to the laser device 3, and the discharge amount of spent laser gas discharged from the pipe 9 are controlled in the laser device 3. By circulating and reusing the laser gas between the gas processing device 2 and the laser device 3, it is possible to reduce consumption of fresh laser gas.

The fresh laser gas can also be supplied to the gas processing device 2 from the supply source 4 via a pipe 6. This fresh laser gas is used, for example, during startup of the gas processing device 2. Details will be described later.

### <Control Device>

In FIG. 1, a control device 10 is an electronic circuit that controls the gas processing device 2. The control device 10 includes a processing unit 11, a storage unit 12, an input/output interface (I/O) 13, and a communication unit 14. The processing unit 11 is a processor represented by a CPU and controls the gas processing device 2 by executing programs stored in the storage unit 12. The storage unit 12 is a storage device including ROM, RAM, and HDD and stores, in addition to the programs executed by the processing unit 11, various kinds of control information. The I/O 13 is an interface that transmits and receives signals between the processing unit 11 and an external device. The external device is, for example, an actuator such as a motor or a solenoid provided in the gas processing device 2, or a sensor. The communication unit 14 is a communication device that communicates, via a communication line, with an upstream device or a control device of the laser device 3.

### <Gas Processing Device>

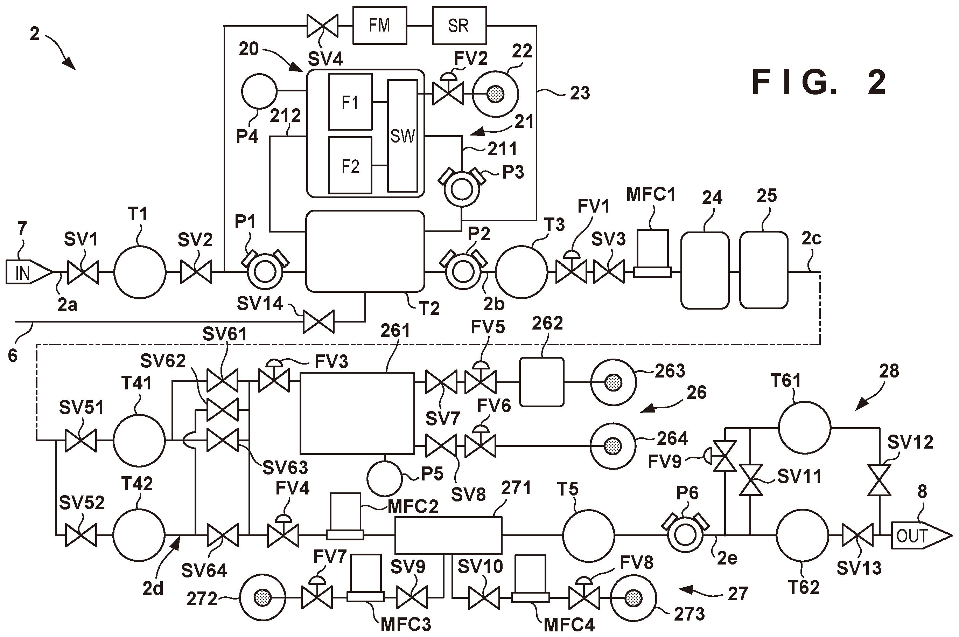

The configuration of the gas processing device 2 will be described with reference to FIG. 2. FIG. 2 is a block diagram of the gas processing device 2. Each configuration of the gas processing device 2 will be described along a flow direction of laser gas serving as a processing target gas. In the following description, an upstream side and a downstream side are defined with reference to the flow direction of the laser gas.

The gas processing device 2 includes a pipe 2a connected to the pipe 7. A solenoid valve SV1 is provided in the pipe 2a. The solenoid valve SV1 switches introduction of the laser gas supplied from the laser device 3 via the pipe 7 into the gas processing device 2. In a case where the solenoid valve SV1 is open, the laser gas is introduced, and in a case where the solenoid valve SV1 is closed, the laser gas is not introduced. An impurity concentration of the introduced laser gas is, for example, equal to or more than 1000 ppm. The laser gas that has passed through the solenoid valve SV1 flows into a tank T1 via the pipe 2a. The tank T1 is maintained at a negative pressure (for example, 0.05 to 0.098 MPa) by a pump P1 on the pipe 2a.

The tank T1 stores laser gas. Even in a case where the spent laser gas discharged from the laser device 3 is intermittently supplied to the gas processing device 2, by storing the laser gas in the tank T1, the laser gas can be stably delivered to the downstream side from the tank T1. The tank T1 is connected to the pump P1 via a solenoid valve SV2. In a case where the solenoid valve SV2 is open, the tank T1 and the pump P1 communicate with each other via the pipe 2a, and in a case where the solenoid valve SV2 is closed, the tank T1 and the pump P1 are disconnected.

The pump P1 is a supply pump that supplies the laser gas to a tank T2 connected to an end portion of the pipe 2a. When the solenoid valve SV2 is controlled to be open and the pump P1 is operated, the spent laser gas stored in the tank T1 is supplied to the tank T2 via the pipe 2a. The tank T2 is a buffer tank that accommodates the laser gas. The spent laser gas and the laser gas from which impurities have been removed by a remover 20 coexist in the tank T2. Since the spent laser gas is diluted in the tank T2, it is possible to prevent the laser gas having an extremely high impurity concentration from being directly supplied to the remover 20.

The tank T2 is maintained at, for example, a slightly positive pressure (for example, 0.1 to 0.2 MPa) relative to atmospheric pressure by the pumps P1 to P3. A volume of the tank T2 has, for example, a volume at least equal to or more than that of the tank T1, and as the volume becomes larger, a dilution effect of the spent laser gas increases. The tank T2 is connected to the pipe 6 via a solenoid valve SV14. When the solenoid valve SV14 is controlled to be open, fresh laser gas can be supplied to the tank T2 from the supply source 4.

The remover 20 is an automatic regenerative purifier that removes impurities from the laser gas. The remover 20 alternately uses two filters F1 and F2 by a switching unit SW. Each of the filters F1 and F2 includes a physical filter that captures dust and the like in the laser gas and an adsorbent that adsorbs impurities in the laser gas. The switching unit SW connects one of the filters F1 and F2 to a supply pipe 211 and connects the other to a supply source 22 via a flow rate control valve FV2. The supply source 22 supplies cleaning gas for cleaning the filters F1 and F2 to the remover 20. The cleaning gas removes impurities and the like adhering to the filters F1 and F2 and regenerates the filters F1 and F2. A pump P4 is connected to the remover 20. The pump P4 is, for example, a scroll pump and suctions and removes cleaning gas remaining in the filters F1 and F2.

A circulation unit 21 circulates the laser gas between the tank T2 and the remover 20. As the laser gas in the tank T2 repeatedly passes through the remover 20, an impurity removal effect is improved and an impurity concentration of the laser gas in the tank T2 can be reduced. The circulation unit 21 includes the supply pipe 211, a return pipe 212, and a pump P3. The supply pipe 211 is a pipe that is connected to the tank T2 and the remover 20 and is for supplying the laser gas from the tank T2 to the remover 20. The return pipe 212 is a pipe that is connected to the tank T2 and the remover 20 and is for supplying the laser gas from the remover 20 to the tank T2.

The pump P3 is a circulation pump that is provided in the supply pipe 211 and pressure-feeds the laser gas from the tank T2 to the remover 20. Note that the pump P3 may be provided in the return pipe 212. In this case, the pump P3 pressure-feeds the laser gas from the remover 20 to the tank T2. In addition, the pump P3 may also be provided in each of the supply pipe 211 and the return pipe 212.

A concentration sensor SR detects an impurity concentration of the laser gas in the tank T2. In the present embodiment, the concentration sensor SR is provided in a pipe 23 branched from the pipe 211. The pipe 23 is connected to a pipe between the solenoid valve SV2 and the pump P1. The laser gas that has passed through the pipe 23 is returned to the tank T2 via the pump P1. A flow rate sensor FM and a solenoid valve SV4 are provided in the pipe 23. In a case where the impurity concentration of the laser gas in the tank T2 is detected, the solenoid valve SV4 is controlled to be open, whereby the laser gas in the tank T2 flows through the pipe 23 and the impurity concentration thereof can be detected by the concentration sensor SR. In a case where the impurity concentration of the laser gas in the tank T2 is not detected, the solenoid valve SV4 is controlled to be closed. The installation location of the concentration sensor SR is not limited thereto. For example, the concentration sensor SR may be provided in the tank T2.

The pump P2 is a discharge pump that is connected to the tank T2 via a pipe 2b and discharges the laser gas from the tank T2. When the pump P2 is operated, the spent laser gas accommodated in the tank T2 is discharged to a tank T3 via the pipe 2b. The tank T3 is maintained at, for example, a positive pressure (for example, 0.76 to 0.95 MPa) by the pump P2. By removal of impurities by the remover 20, laser gas having an impurity concentration reduced to, for example, equal to or less than 10 ppm is accumulated in the tank T3. A pipe 2c is connected to the downstream side of the tank T3, and a flow rate control valve FV1, a solenoid valve SV3, and a mass flow controller MFC1 are provided in the pipe 2c. The mass flow controller MFC1 controls a flow rate of the laser gas supplied to a remover 24.

The remover 24 is an inline purifier that removes impurities from the laser gas. The remover 24 includes, for example, an adsorbent that adsorbs impurities. By the remover 24, an impurity concentration of the laser gas is reduced to, for example, equal to or less than 10 ppb. The laser gas from which impurities have been removed by the remover 24 is supplied to a getter 25. The getter 25 includes a getter material and removes, for example, inert impurities such as CF4. Here, an impurity concentration of the laser gas is reduced to, for example, equal to or less than 1 ppb.

On the downstream side of the getter 25, the pipe 2c branches into two pipes, and the branched pipes are connected to a solenoid valve SV51 and a solenoid valve SV52, respectively. The laser gas discharged from the getter 25 is distributed to and accumulated in either a tank T41 or T42 in accordance with opening and closing states of the solenoid valves SV51 and SV52. An analysis unit 26 and a mixing unit 27 are provided on the downstream side of the tanks T41 and T42, and the laser gas in the tanks T41 and T42 is supplied, via a plurality of branched pipes 2d, to the analysis unit 26 or the mixing unit 27 by solenoid valves SV61 to SV64. While the laser gas in the tank T41 is analyzed by the analysis unit 26 and the laser gas in the tank T41 is adjusted by the mixing unit 27 on the basis of an analysis result thereof, the laser gas is accumulated in the tank T42. Conversely, while the laser gas in the tank T42 is analyzed by the analysis unit 26 and the laser gas in the tank T42 is adjusted by the mixing unit 27 on the basis of an analysis result thereof, the laser gas is accumulated in the tank T41.

The analysis unit 26 is a device that analyzes components of the laser gas. The mixing unit 27 is a device that mixes, into the laser gas, component gases constituting the laser gas on the basis of an analysis result of the analysis unit 26. Before supplying laser gas to be reused to the laser device 3, by analyzing the components of the laser gas accumulated in the tank T41 or T42 and replenishing deficient components, high-quality reusable gas can be produced.

The analysis unit 26 includes a mass spectrometer 261 connected to the pipe 2d. The laser gas in the tank T41 or T42 is supplied to the mass spectrometer 261 via a flow rate control valve FV3 on the pipe 2d. The mass spectrometer 261 analyzes components of the laser gas. A pump P5 is connected to the mass spectrometer 261. The pump P5 is, for example, a scroll pump. By operation of the pump P2, the laser gas is introduced, as an analysis target, into the mass spectrometer 261 from the tank T41 or T42.

In addition, the mass spectrometer 261 is configured such that analysis gas can be introduced from supply sources 263 and 264. The gas from the supply source 263 is background measurement gas and is supplied to the mass spectrometer 261 via a purifier 262, a flow rate control valve FV5, and a solenoid valve SV7 in order to measure a background. In addition, the gas from the supply source 264 is calibration gas and is supplied to the mass spectrometer 261 via a flow rate control valve FV6 and a solenoid valve SV8 when calibration of the mass spectrometer 261 is performed.

The mixing unit 27 includes a gas mixer 271 connected to the pipe 2d. The laser gas in the tank T41 or T42 is supplied to the gas mixer 271 via a flow rate control valve FV4 and a mass flow controller MFC2 on the pipe 2d. The gas mixer 271 performs component adjustment of the laser gas such that respective components in the laser gas have predetermined concentration ratios in accordance with a component analysis result of the mass spectrometer 261. The gas (for example, argon gas and xenon gas) for mixing is supplied to the gas mixer 271 from supply sources 272 and 273. The gas from the supply source 272 is supplied to the gas mixer 271 via a flow rate control valve FV7, a mass flow controller MFC3, and a solenoid valve SV9. In addition, the gas from the supply source 273 is supplied to the gas mixer 271 via a flow rate control valve FV8, a mass flow controller MFC4, and a solenoid valve SV10. The laser gas whose components have been adjusted in the gas mixer 271 is accumulated in a tank T5 via the pipe 2d.

The laser gas accumulated in the tank T5 is of a quality allowing reuse in the laser device 3. A plurality of branched pipes 2e is connected to the downstream side of the tank T5. A supply unit 28 is provided in the pipe 2e. The supply unit 28 supplies the laser gas in the tank T5 to the laser device 3. The supply unit 28 includes a pump P6 on the pipe 2e. The pump P6 pressure-feeds the laser gas in the tank T5 to a tank T62 via the pipe 2e. A solenoid valve SV13 is provided between the tank T62 and the pipe 8. When the solenoid valve SV13 is controlled to be open, the laser gas is supplied from the tank T62 to the laser device 3 via the pipe 8.

The supply unit 28 includes a tank T61 connected to the pipe 2e. The tank T61 functions as a pressure buffer that adjusts a pressure of the tank 62, and the tank T62 is maintained at a positive pressure (for example, 0.61 to 0.95 MPa). The tank T61 and the tank T62 are connected to each other via solenoid valves SV11 and SV12 and a flow rate control valve FV9 on the pipe 2e.

By operation control of the pump P6 and opening and closing control of the solenoid valves SV11 and SV12, the pressure of the laser gas supplied to the laser device 3 is adjusted. For example, when the pressure of the tank T62 increases beyond a threshold value, the gas in the tank T62 is released to the tank T61 via the flow rate control valve FV9. Conversely, when the pressure of the tank T62 decreases to equal to or less than the threshold value, the solenoid valve SV11 is controlled to be open, and the gas in the tank T61 is sent into the tank T62, thereby maintaining the pressure of the tank T62.

With the above configuration, the laser processing system 1 circulates the laser gas between the gas processing device 2 and the laser device 3, purifies the laser gas in the gas processing device 2, and reuses the laser gas. By reducing the consumption of fresh laser gas, manufacturing costs can be reduced. By circulating the laser gas between the remover 20 and the tank T2, even in a case where laser gas having a high impurity concentration is supplied from the laser device 3 to the gas processing device 2, the laser gas is diluted in the tank T2. It is possible to prevent laser gas having an extremely high impurity concentration from being supplied to the remover 20 and causing significant damage to the removal capability of the remover 20, to extend maintenance cycles of the filters F1 and F2, and to enable continuous operation.

### <Supply Control of Laser Gas to Remover>

In the present embodiment, as described above, by diluting an impurity concentration of the laser gas in the tank T2, it is possible to prevent laser gas having an extremely high impurity concentration from being supplied to the remover 20. However, when laser gas having a high impurity concentration is continuously supplied to the tank T2 or laser gas having an extremely high impurity concentration is supplied to the tank T2, a dilution effect of the impurity concentration in the tank T2 decreases. Therefore, for the removal of impurities in the remover 20, the gas processing device 2 has two types of operation modes.

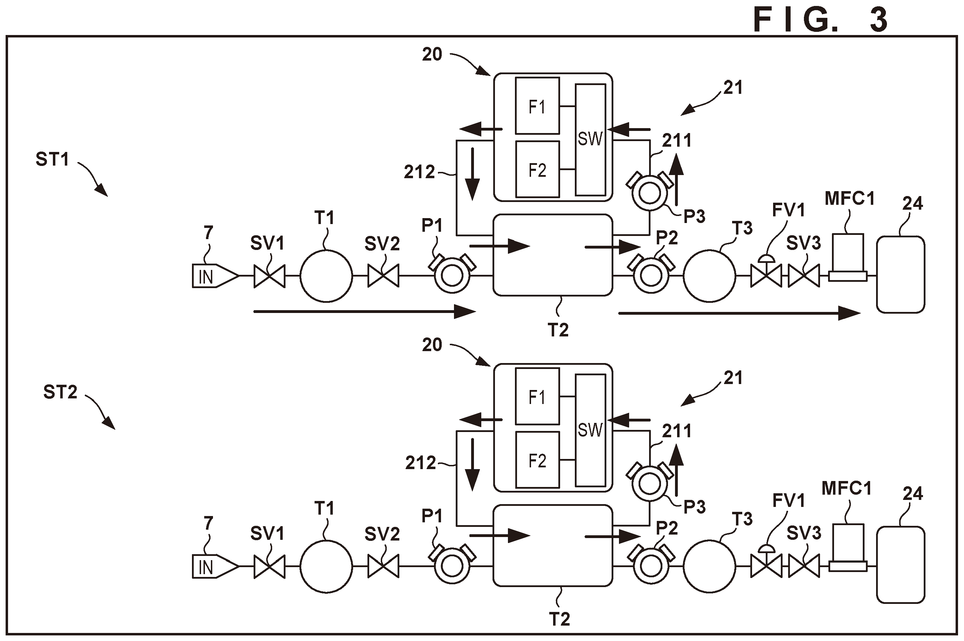

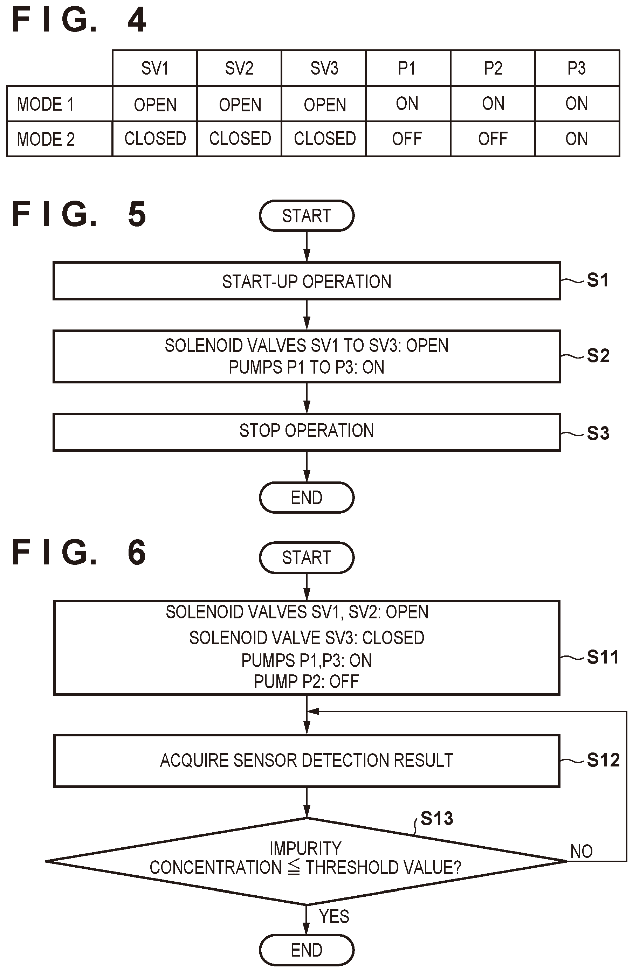

FIG. 3 is an explanatory diagram of the operations, and FIG. 4 illustrates control states (opening and closing states of the solenoid valves SV1 to SV3 and operation states of the pumps P1 to P3) of respective operation modes.

A state ST1 in FIG. 3 indicates an operation state in Mode 1. Mode 1 is selected in a normal state (in a case where an impurity concentration of the laser gas in the tank T2 is equal to or less than a threshold value (for example, 10 ppm)). The impurity concentration may be determined based on a detection result of the concentration sensor SR, using an impurity having a highest content as a reference. In Mode 1, the solenoid valves SV1 to SV3 are controlled to be open, and the pumps P1 to P3 are controlled to be ON (operated) (FIG. 4). In Mode 1, a supply operation in which the spent laser gas is supplied from the tank T1 to the tank T2, a circulation operation in which the laser gas is circulated between the tank T2 and the remover 20, and a discharge operation in which the laser gas having a reduced impurity concentration is discharged from the tank T2 to the tank T3 and supplied to the remover 24 are performed in parallel.

A state ST2 in FIG. 3 indicates an operation state in Mode 2. Mode 2 is selected in an emergency state (in a case where an impurity concentration of the laser gas in the tank T2 exceeds a threshold value). In Mode 2, the solenoid valves SV1 to SV3 are controlled to be closed, the pumps P1 and P2 are controlled to be OFF (stopped), and the pump P3 is controlled to be ON (operated) (FIG. 4). In Mode 2, the circulation operation is performed, and the supply operation and the discharge operation are not performed. That is, in Mode 2, supply of the spent laser gas from the tank T1 to the tank T2 is stopped. In addition, in Mode 2, discharge of the laser gas from the tank T2 to the tank T3 is also stopped, and supply of the laser gas to the remover 24 is also stopped by controlling the solenoid valve SV3 to be closed. In Mode 2, while the laser gas having a high impurity concentration is prevented from being supplied to the remover 24, circulation of the laser gas between the tank T2 and the remover 20 is continued. The impurity concentration of the laser gas in the tank T2 decreases over time, and return to Mode 1 becomes possible.

Thus, in the present embodiment, when the impurity concentration of the laser gas in the tank T2 increases, the spent laser gas is prohibited from being newly introduced into the tank T2, and the laser gas is also prohibited from being discharged from the tank T2 to the downstream side. Accordingly, it is possible to avoid a situation in which laser gas having a high impurity concentration directly impacts the remover 20 and the remover 24, thereby making it necessary to stop the operation of the gas processing device 2 for maintenance and the like. Moreover, since circulation of the laser gas between the tank T2 and the remover 20 is continued, return to Mode 1 eventually becomes possible, and circulation of the laser gas between the laser device 3 and the gas processing device 2 can be continued, or alternatively, can be resumed after a temporary stop. Therefore, continuous operation performance of the system 1 can be improved.

Note that the above-described operation modes are merely examples, and operation in various operation modes is also possible by controlling the solenoid valves SV1 to SV3 and the pumps P1 to P3. For example, there may be a mode in which the solenoid valves SV1 and SV2 are controlled to be open, the solenoid valve SV3 is controlled to be closed, the pumps P1 and P2 are controlled to be OFF, and the pump P2 is controlled to be ON (referred to as Mode 3), and in Mode 3, the supply operation and the circulation operation are performed, and the discharge operation is not performed. Mode 3 may be performed when an amount of the laser gas accumulated in the tank T2 is small (or is estimated to become small).

### <Control Example of Control Device>

A processing example of the control device 10 related to the supply control of the laser gas to the remover 20 will be described. FIGS. 5 to 7 are flowcharts illustrating processing examples executed by the processing unit 11.

Startup of the entire laser processing system 1 or an initial operation stage is assumed. In S1 of FIG. 5, a startup operation of the gas processing device 2 is performed. As a premise for circulating the laser gas between the tank T2 and the remover 20, it is desirable that laser gas having a relatively low impurity concentration is accumulated in the tank T2.

Therefore, as one example of processing included in the startup operation, fresh laser gas can be introduced into the tank T2. For example, in a state in which the pumps P1 to P3 are stopped, evacuation of the tank T2 is performed using the pump P4. When the solenoid valve SV14 is controlled to be open, fresh laser gas can be sucked into the tank T2 from the supply source 4. Thereafter, the solenoid valve SV14 is controlled to be closed, and evacuation by the pump P4 is ended. Thus, by introducing the fresh laser gas into the tank T2 in advance, dilution of the spent laser gas that is first introduced into the tank T2 upon start of the operation of the laser device 3 can be promoted, and introduction of the laser gas having a high impurity concentration into the remover 20 (and the remover 24) can be suppressed.

As another example of processing included in the startup operation, after start of the operation of the laser device 3 and at a stage at which the spent laser gas starts to be supplied to the gas processing device 2, the processing example of FIG. 6 may be executed. In S11, the solenoid valves SV1 and SV2 are controlled to be open, and the solenoid valve SV3 is controlled to be closed. The pumps P1 and P3 are controlled to be ON (operated), and the pump P2 is controlled to be OFF (stopped). That is, the above-described Mode 3 is performed. Accordingly, the spent laser gas is supplied from the tank T1 to the tank T2, and the laser gas is circulated between the tank T2 and the remover 20. By performing the supply operation and the circulation operation in an initial operation stage of the laser device 3, the laser gas from which impurities have been removed can be accumulated in the tank T2, and introduction of the laser gas having a high impurity concentration into the remover 20 (and the remover 24) can be suppressed.

In S12, a detection result of an impurity concentration of the laser gas in the tank T2 by the concentration sensor SR is acquired. In S13, it is determined whether the detection result (impurity concentration) acquired in S12 is equal to or less than a threshold value, and in a case where the detection result exceeds the threshold value, the processing returns to S12 and the same processing is repeated. When the detection result (impurity concentration) is equal to or less than the threshold value, it is regarded that the preparation is completed, and the startup operation is ended.

Returning to FIG. 5, in S2, in order to start the operation in Mode 1, the solenoid valves SV1 to SV3 are controlled to be open, and the pumps P1 to P3 are controlled to be ON (operated). When a predetermined stop condition is satisfied, a stop operation of the gas processing device 2 is performed in S3. The solenoid valves SV1 to SV3 are controlled to be closed, and the pumps P1 to P3 are controlled to be OFF (stopped).

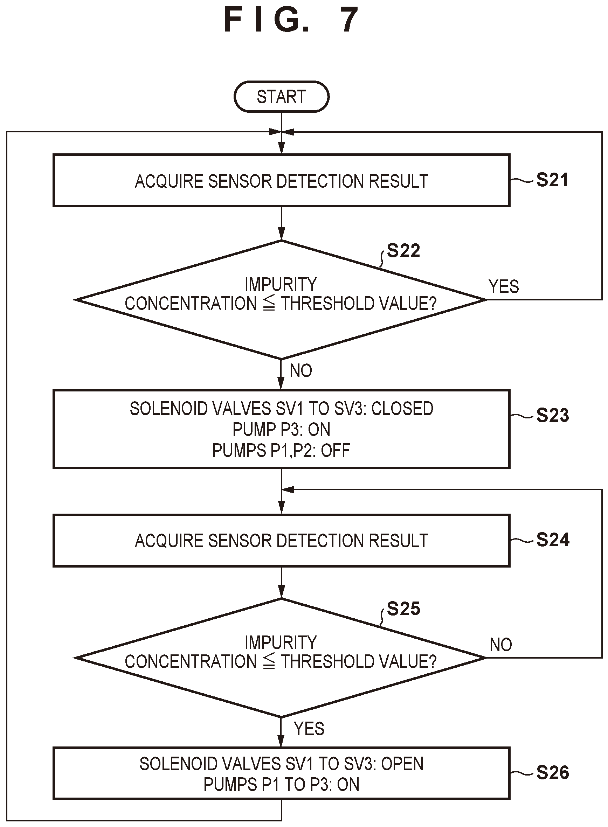

FIG. 7 illustrates a processing example after the processing of FIG. 5. Here, control related to switching between Mode 1 and Mode 2 is performed. This control is started together with the transition of the operation state of the gas processing device 2 to Mode 1 (execution of S2) and is repeatedly performed until purification of the laser gas by the gas processing device 2 is ended (S3).

In S21, a detection result of an impurity concentration of the laser gas in the tank T2 by the concentration sensor SR is acquired. In S22, it is determined whether the detection result (impurity concentration) acquired in S21 is equal to or less than the threshold value, and when the detection result is equal to or less than the threshold value, the processing returns to S21 in order to continue Mode 1, and the same processing is repeated. When the detection result (impurity concentration) exceeds the threshold value, processing of S23 is performed.

In S23, in order to operate in Mode 2, the solenoid valves SV1 to SV3 are controlled to be closed, the pumps P1 and P2 are controlled to be OFF (stopped), and the pump P3 is controlled to be ON (operated).

In S24, a detection result of an impurity concentration of the laser gas in the tank T2 by the concentration sensor SR is acquired. In S25, it is determined whether the detection result (impurity concentration) acquired in S24 is equal to or less than the threshold value, and in a case where the detection result exceeds the threshold value, the processing returns to S24 and the same processing is repeated. When the detection result (impurity concentration) is equal to or less than the threshold value, processing of S26 is executed. In S26, in order to resume the operation in Mode 1, the solenoid valves SV1 to SV3 are controlled to be open, and the pumps P1 to P3 are controlled to be ON (operated).

### <Other Embodiments>

Although the above-described embodiment illustrates an example in which the present invention is applied to the processing of the spent laser gas, the present invention is applicable to processing of various types of gases. The content of the processing may be purification for reuse or may be purification.

The embodiments of the invention have been described above, the invention is not limited to the foregoing embodiments, and various variations/changes are possible within the spirit of the invention.

## Claims

1. A gas processing device comprising:
a buffer tank to which a processing target gas is supplied;
a first remover that removes impurities from the processing target gas; and
circulation means for circulating the processing target gas between the buffer tank and the first remover, wherein
the processing target gas having a reduced impurity concentration is discharged from the buffer tank.

2. The gas processing device according to claim 1, further comprising:
a second remover that removes impurities from the processing target gas discharged from the buffer tank.

3. The gas processing device according to claim 1, further comprising:
discharge means for discharging the processing target gas from the buffer tank;
a sensor that detects an impurity concentration of the processing target gas in the buffer tank; and
control means for controlling the discharge means on the basis of a detection result of the sensor.

4. The gas processing device according to claim 1, wherein
the processing target gas is laser gas discharged from a laser device.

5. The gas processing device according to claim 4, wherein
the gas processing device is a gas production device that produces laser gas to be supplied to the laser device by reusing the laser gas.

6. The gas processing device according to claim 5, further comprising:
analysis means for analyzing a component of the laser gas before the laser gas is supplied to the laser device; and
mixing means for mixing gas of a component constituting the laser gas with the laser gas on the basis of an analysis result of the analysis means before the laser gas is supplied to the laser device.

7. The gas processing device according to claim 4, further comprising:
supply means for supplying the laser gas to the laser device,
wherein the laser gas is circulated between the gas processing device and the laser device.

8. The gas processing device according to claim 1, wherein
the circulation means includes
a supply pipe that is connected to the buffer tank and the first remover and supplies the processing target gas from the buffer tank to the first remover,
a return pipe that is connected to the buffer tank and the first remover and supplies the processing target gas from the first remover to the buffer tank, and
a circulation pump that is provided in at least one of the supply pipe and the return pipe and pressure-feeds the processing target gas.

9. The gas processing device according to claim 3, further comprising:
supply means for supplying the processing target gas to the buffer tank during circulation of the processing target gas by the circulation means,
wherein the control means
operates the supply means and the discharge means in a case where a detection result of the sensor indicates a concentration equal to or less than a threshold value, and
stops the supply means and the discharge means in a case where the detection result of the sensor indicates a concentration exceeding the threshold value.

10. The gas processing device according to claim 1, wherein
gas having an impurity concentration lower than an impurity concentration of the processing target gas to be supplied to the buffer tank is stored in advance in the buffer tank.

11. A gas production method comprising:
a supply process of supplying a processing target gas to a buffer tank;
a circulation process of circulating the processing target gas between the buffer tank and a first remover that removes impurities from the processing target gas; and
a discharge process of discharging the processing target gas having a reduced impurity concentration from the buffer tank.

12. The gas production method according to claim 11, wherein
the supply process is performed during the circulation process.

13. The gas production method according to claim 11, further comprising:
a process of supplying the processing target gas discharged in the discharge process, to a second remover that further removes impurities from the processing target gas.

14. The gas production method according to claim 11, further comprising:
a detection process of detecting an impurity concentration of the processing target gas in the buffer tank; and
a determination process of determining whether to execute the discharge process on the basis of a detection result of the detection process.

15. The gas production method according to claim 11, wherein
the processing target gas is laser gas discharged from a laser device, and
the gas production method is a method of manufacturing laser gas to be supplied to the laser device by reusing the laser gas.
